# FASCICULE DE BREVET EUROPEEN

(11) **EP 4 299 437 B1**
(45) Date de publication et mention de la délivrance du brevet: **05.08.2026**
(21) Numéro de dépôt: 23180924.5
(22) Date de dépôt: 22.06.2023
(51) Int. Cl.: H01Q 1/28, B64C 1/36, B29C 70/30, B64F 5/10, H01Q 1/42

(54) **PROCEDE DE FABRICATION D'UN RADÔME D'AERONEF PAR ASSEMBLAGE DE PIECES DE PEAU DE DIMENSIONS REDUITES, RADÔME D'AERONEF ET AERONEF**
VERFAHREN ZUR HERSTELLUNG EINES FLUGZEUGRADOMS DURCH ZUSAMMENFÜGEN VON HAUTTEILEN MIT REDUZIERTEN ABMESSUNGEN, FLUGZEUGRADOM UND FLUGZEUG
METHOD FOR MAKING AN AIRCRAFT RADOME BY ASSEMBLING SKIN PARTS OF REDUCED DIMENSIONS, AIRCRAFT RADOME AND AIRCRAFT

(30) Priorité: 30.06.2022 FR 2206672
(43) Date de publication de la demande: 03.01.2024
(73) Titulaire: Airbus Opérations SAS, 31060 Toulouse Cedex 09 (FR)
(72) Inventeur: FOURNIE, Jacques, 31060 TOULOUSE (FR); BERNUS, Christophe, 31060 TOULOUSE (FR); VERSTRAETE, Olivier, 31060 TOULOUSE (FR); BERHAULT, Thomas, 31060 TOULOUSE (FR)
(74) Mandataire: Cabinet Le Guen Maillet

(56) Documents cités:
- FR-A1- 2 431 200
- GB-A- 2 133 337
- US-A- 4 620 890
- US-A- 5 344 685

## Description

### DOMAINE TECHNIQUE

La présente invention concerne les radômes d'aéronef. L'invention concerne plus particulièrement un procédé de fabrication d'un radôme d'aéronef ainsi qu'un radôme d'aéronef et un aéronef comprenant un tel radôme.

### ÉTAT DE LA TECHNIQUE ANTÉRIEURE

De nombreux aéronefs, dont des avions de transport civil et militaire, comportent un radôme installé à l'avant du fuselage et formant un dôme ou une pointe. La fonction d'un tel radôme est de protéger un dispositif de type radar positionné à l'avant de l'aéronef, tout en offrant à l'aéronef de bonnes performances aérodynamiques. Du fait de la présence d'un radar sous le radôme, ce dernier doit être réalisé dans un matériau perméable aux ondes électromagnétiques, par exemple un matériau composite électriquement isolant.

Les radômes d'aéronefs existant sont généralement des constructions dites « sandwich » qui consistent à fabriquer un ensemble rigide présentant au moins une coque, encore appelée âme, agencée entre deux peaux, ce qui permet d'augmenter significativement la rigidité de flexion tout en offrant une bonne transparence aux ondes électromagnétiques, notamment par ajustement de l'épaisseur du radôme à la longueur d'onde du radar couvert. Le rôle d'une âme est d'offrir un support aux peaux assemblées afin que l'ensemble puisse reprendre les efforts de flexion, l'âme présentant elle-même des caractéristiques de résistance au cisaillement. Les peaux utilisées pour les radômes sont faites de grands pétales assemblés à la main. Ces pétales sont généralement des tissus (par exemple de quartz ou de verre) imprégnés d'une résine organique ou synthétique. Certains radômes d' aéronef présentent une structure de type « double sandwich », c'est-à-dire qu'ils sont faits par empilement d'une peau externe, d'une première coque, d'une peau centrale, d'une deuxième coque et enfin d'une peau interne. D'autres radômes peuvent présenter une structure plus complexe encore, de type « triple sandwich », dans laquelle trois coques sont réparties dans un empilement en alternance de peaux et de coques. Selon un exemple de fabrication, une première peau est assemblée sur un moule, puis une coque est assemblée sur cette première peau, et une deuxième peau est ensuite assemblée sur la coque. La forme des radômes, présentant une double courbure prononcée, implique un assemblage manuel et la taille des pétales est limitée par la déformabilité des plans de tissu au regard de la forme du support présentant cette double courbure.

Un exemple de l'art antérieur est fourni par le document US4620890A.

La situation peut donc être améliorée.

### EXPOSÉ DE L'INVENTION

Un objet de la présente invention est de proposer un procédé de fabrication d'un radôme d'aéronef susceptible d'être automatisé et permettant de réduire le taux de chute du matériau de fabrication.

A cet effet, il est proposé un radôme d'aéronef comprenant au moins une coque, une première peau et une deuxième peau respectivement formées d'un premier assemblage de pièces de peau et d'un deuxième assemblage de pièces de peau, ledit radôme étant configuré tel que :
- tout ou partie des pièces de peau desdits premier et deuxième assemblages recouvre partiellement une ou plusieurs pièces de peau voisines de l'assemblage qui les comprend, et,
- le rapport entre la surface d'une pièce de peau recouvrant une ou plusieurs pièces de peau voisines et la surface totale de cette pièce de peau n'excède pas une valeur seuil prédéterminée.

Par ailleurs une couche de peau comprend des pièces de peau agencées côte à côte pour former au moins une couronne circulaire assemblée sur une portion arrière dudit radôme et des pièces de peau agencées côte à côte et formant des alignements parallèles de pièces de peau dans une partie avant du radôme.

Il est ainsi avantageusement possible d'opérer un assemblage automatisé des pièces de peau dont la dimension homogène réduite autorise leur pose par un dispositif automatisé, tel qu'un robot industriel. En outre, les assemblages de pièces de peau sont tels que les recouvrements partiels permettent d'obtenir une rigidité structurelle et le fait que ces recouvrements n'excèdent pas un pourcentage prédéfini de la surface par pièce de peau permet de garantir une bonne transparence aux ondes électromagnétiques. Cette transparence électromagnétique est particulièrement avantageuse lorsqu'un ou plusieurs faisceaux électromagnétiques d'un radar ou d'antennes positionnés dans ou à l'arrière du radôme traversent le radôme en une zone appelée « zone radiofréquence ».

Le radôme selon l'invention peut également comporter les caractéristiques suivantes, considérées seules ou en combinaison :
- La valeur seuil dudit rapport est égale à 30%.
- Lesdits premier et deuxième assemblages reproduisent chacun un motif d'assemblage prédéterminé.
- Chacune des pièces de peau présente une forme rectangulaire ou trapézoïdale, ou encore triangulaire.
- La plus grande dimension de chacune des pièces de peau est inférieure à un tiers de la plus grande dimension hors-tout du radôme, préférentiellement inférieure à 42 cm (environ la longueur d'un format A3), encore plus préférentiellement inférieure à 30 cm (environ la longueur d'un format A4).
- Les pièces de peau sont réalisées dans un matériau composite comprenant un renfort en tissu de fibres parmi lesquelles la fibre de lin, le chanvre, le polyéthylène simple ou à très haut poids moléculaire, le tissu de verre, le tissu de quartz, le tissu d'aramide, ledit tissu étant préimprégné d'une résine organique ou synthétique thermodurcissable ou thermoplastique.
- La coque du radôme est réalisée en mousse, ou en papier, ou en résine, et présente une structure alvéolaire.

L'invention a également pour objet un procédé d'assemblage d'un radôme d'aéronef comprenant au moins un assemblage d'une première peau et d'une deuxième peau sur respectivement deux faces opposées d'une même coque, ladite première peau et ladite deuxième peau étant respectivement formées d'un premier assemblage de pièces de peau et d'un deuxième assemblage de pièces de peau, le procédé étant caractérisé en ce que :
- tout ou partie des pièces de peau desdits premier et deuxième assemblages recouvre partiellement une ou plusieurs pièces de peau voisines de l'assemblage qui les comprend, et,
- le rapport entre la surface d'une pièce de peau recouvrant une ou plusieurs pièces de peau voisines et la surface totale de cette pièce de peau n'excède pas une valeur seuil prédéterminée, ladite valeur seuil étant préférentiellement égale à 30%.

Par ailleurs une couche de peau comprend des pièces de peau agencées côte à côte pour former au moins une couronne circulaire assemblée sur une portion arrière dudit radôme et des pièces de peau agencées côte à côte et formant des alignements parallèles de pièces de peau dans une partie avant du radôme.

L'invention concerne également un aéronef comprenant un radôme tel que précédemment décrit.

### BRÈVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
[Fig. **1****]** est une représentation schématique en vue de devant d'un radôme d'aéronef selon un mode de réalisation ;
[Fig. 2] est une représentation schématique en vue en perspective du radôme d'aéronef déjà représenté sur la Fig. 1 ;
[Fig. 3] est un diagramme illustrant des étapes d'un procédé d'assemblage du radôme d'aéronef déjà représenté sur les Fig. 1 et Fig. 2, selon un mode de réalisation ; et,
[Fig. 4] illustre un aéronef comprenant un radôme d'aéronef, selon un mode de réalisation.

### EXPOSÉ DÉTAILLÉ DE MODES DE RÉALISATION

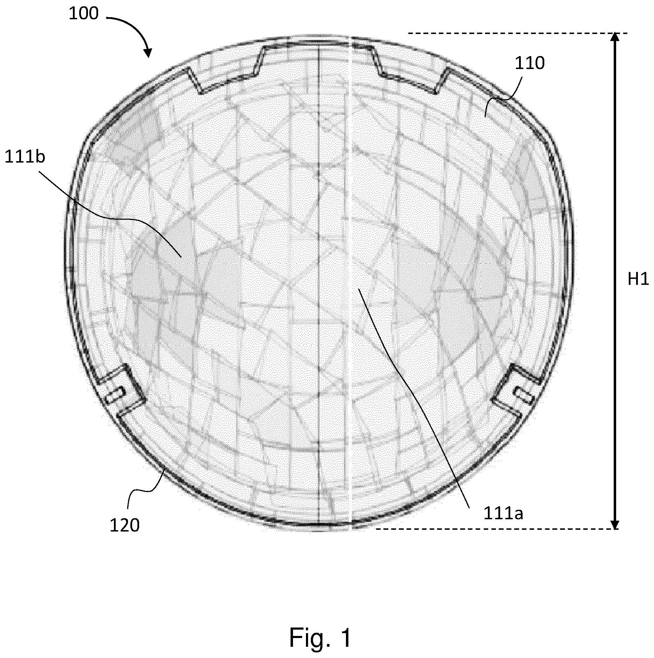

La Fig. 1 est une représentation schématique illustrant un radôme d'aéronef 100 assemblé selon un mode de réalisation, vu de devant. Le radôme présente une forme générale de coque pointue, formant un dôme, destinée à être fixée à l'avant du fuselage d'un aéronef. L'avant du radôme d'aéronef 100 est défini ici comme la pointe du radôme (ou le sommet du dôme), et donc comme la partie la plus éloignée des éléments de fuselage de l'aéronef auxquels le radôme est fixé. *A contrario*, l'arrière du radôme est défini comme la partie la plus proche des éléments de fuselage de l'aéronef auquel le radôme est fixé. Selon un mode de réalisation, le radôme comprend un assemblage de deux peaux 110 et 130 sur une coque 120. Selon des variantes, le radôme d'aéronef 100 peut comprendre plusieurs coques similaires à la coque 120, chacune des faces intérieures et extérieures de ces coques étant alors recouverte d'au moins un assemblage de pièces de peau. Un tel assemblage constitue une couche de pièces de peau, encore appelée usuellement « épaisseur de peau », « pli de peau » ou « pli ». Ainsi, selon des variantes, le radôme d'aéronef 100 peut comprendre une alternance de coques 120 et de plis de peau, chaque surface de chaque coque 120 étant revêtue d'au moins un pli de peau et deux coques d'une paire de coques 120 voisines dans l'alternance étant séparées par au moins un pli de peau.

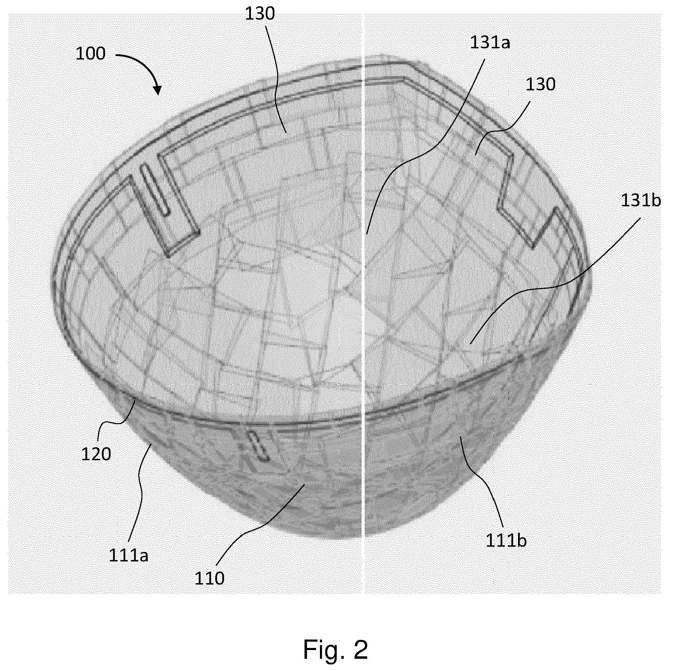

Selon l'exemple décrit en relation avec la Fig. 1, une première peau 110 constitue une peau extérieure du radôme 100 et une seconde peau 130, non référencée sur la Fig. 1 mais référencée sur la Fig. 2, constitue une peau intérieure du radôme 100. La peau extérieure 110 du radôme 100 est composée d'une pluralité de pièces de peau 111a et 111b, encore appelées « patches », assemblées selon un motif d'assemblage prédéfini. Les termes « motif d'assemblage » désignent ici une combinaison de positionnement de chacune des pièces de peau de la peau extérieure 110 ou de la peau intérieure 130.

Selon un mode de réalisation, les pièces de peau 111a présentent une forme rectangulaire et les pièces de peau 111b présentent une forme trapézoïdale, ces exemples étant non limitatifs, et des pièces de peau peuvent présenter une forme différente, par exemple une forme triangulaire. Seules l'une des pièces de peau 111a et l'une des pièces de peau 111b sont référencées sur la Fig. 1 afin de préserver la clarté et la lisibilité de cette figure.

Avantageusement et astucieusement, tout ou partie des pièces de peau du premier et du deuxième assemblages recouvre partiellement une ou plusieurs pièces de peau voisines de l'assemblage qui les comprend, de sorte à obtenir une rigidité structurelle et donc une bonne capacité de transmission des efforts entre deux pièces voisines de peau.

Avantageusement encore, et tout aussi astucieusement, le rapport entre la surface d'une pièce de peau recouvrant une ou plusieurs pièces de peau voisines et la surface totale de cette pièce de peau n'excède pas une valeur seuil prédéterminée, telle que par exemple une valeur présentant un rapport de 30%.

En outre, chacune des pièces de peau 111a et 111b présente une dimension hors-tout inférieure à une longueur prédéterminée en fonction de la taille globale du radôme 100, de sorte qu'une pièce de peau présente une dimension sensiblement réduite au regard de la taille du radôme 100 et que le positionnement d'une pièce de peau en est rendu plus aisé au regard de la double courbure du radôme.

Par exemple, il peut être défini que la dimension maximale d'une pièce de peau, telle que par exemple sa longueur quand la pièce de peau présente une forme rectangulaire, est sensiblement inférieure à la moitié de la plus grande dimension hors tout du radôme 100. Selon l'exemple décrit sur la Fig. 1, la plus grande dimension hors-tout du radôme d'aéronef 100 est la hauteur H1 de l'arrière du radôme 100. Ainsi, il est possible de manipuler et positionner aisément une pièce de peau, et notamment à l'aide d'un dispositif automatisé tel qu'un robot industriel d'assemblage.

Selon un autre exemple de réalisation, chacune des pièces de peau utilisées pour l'assemblage du radôme présente une forme rectangulaire de dimension A3 ou une forme trapézoïdale ou triangulaire aux dimensions s'inscrivant dans un gabarit rectangulaire de dimension A3.

Selon un autre exemple de réalisation, chacune des pièces de peau utilisées pour l'assemblage du radôme présente une forme rectangulaire de dimension A4 ou une forme trapézoïdale ou triangulaire aux dimensions s'inscrivant dans un gabarit rectangulaire de dimension A4.

Selon un autre exemple de réalisation encore, chacune des pièces de peau utilisées pour l'assemblage du radôme présente une forme rectangulaire de dimension A5 ou une forme trapézoïdale ou triangulaire aux dimensions s'inscrivant dans un gabarit rectangulaire de dimension A5.

Selon un exemple de motif d'assemblage, des pièces de peau 111a rectangulaires sont assemblées bout à bout, pour former une ou plusieurs couronnes circulaires de la peau extérieure 110 du radôme 100, en partant de l'arrière du radôme, puis des pièces de peau 111a rectangulaires sont assemblées pour former des lignes parallèles les unes aux autres dans la partie centrale du reste de la surface de la peau 110 extérieure du radôme 100, et des pièces de peau trapézoïdales 111b sont assemblées dans la partie de surface encore restante pour couvrir la surface totale du radôme, entre la ou les couronnes circulaires et les lignes parallèles précitées. Cela permet avantageusement de mieux contrôler les dimensions des zones de recouvrement entre des pièces de peau voisines les unes des autres.

Selon un mode de réalisation, chacune des peaux intérieure 110 et extérieure 130 peut comprendre plusieurs couches (encore appelées plis) de pièces de peau présentant chacune des motifs d'assemblage distincts. Préférentiellement, les zones de recouvrement entre les pièces de peau sont réparties de façon homogène sur la surface du radôme pour que la transparence électromagnétique soit homogène ou équitablement répartie.

Par exemple, une couche de peau peut comprendre des pièces de peau agencées pour former des lignes parallèles verticales dans la zone centrale du radôme, et deux autres couches peuvent comprendre des pièces de peau agencées pour former des lignes respectivement orientées à +60° et -60° dans la même zone du radôme par rapport à l'orientation des lignes de la première couche.

De façon similaire, une couche de peau peut comprendre des pièces de peau agencées pour former des lignes parallèles dans la zone centrale du radôme, et une autre couche peut comprendre des pièces de peau agencées pour former des lignes croisées orientées à +/- 90° par rapport à l'orientation des lignes de la première couche. Selon un mode de réalisation, une référence de positionnement des pièces de peau est définie comme étant une ligne d'intersection entre un plan vertical passant par la pointe du radôme 100.

Il est à noter que la Fig. 1 illustre une superposition de deux assemblages de pièces de la peau extérieure 110 ou, en d'autres termes, de deux couches de pièces de peau 111a et 111b assemblées selon deux motifs distincts, grâce à un effet de transparence.

Selon un mode de réalisation, la peau extérieure 110 est faite de trois couches de pièces de peau 111a et 111b présentant des motifs d'assemblage distincts, et la peau intérieure 130 est faite de deux couches de pièces de peau 131a et 131b présentant des motifs d'assemblage distincts.

Avantageusement, lorsque plusieurs couches (ou plis) de pièces de peau sont superposées pour former une peau, l'assemblage de cette peau est réalisé de sorte que les zones de recouvrement dans une épaisseur de pièces de peau ne se superposent pas aux zones de recouvrement dans une autre épaisseur, de sorte à optimiser la perméabilité électromagnétique du radôme 100. En effet, la perméabilité électromagnétique du radôme 100 dépend de plusieurs facteurs, dont l'épaisseur des peaux du radôme.

La Fig. 2 est une représentation schématique illustrant le radôme d'aéronef 100 assemblé selon un mode de réalisation, vu en perspective. La vue en perspective représentée permet de visualiser un assemblage de pièces de peau 131a et 131b pour former la peau intérieure 130 sur la coque 120 et l'assemblage de pièces de peau 111a, 111b pour former la peau intérieure 110 sur la coque 120. Selon un mode de réalisation, les pièces de peau 131a présentent une forme rectangulaire et les pièces de peau 131b présentent une forme trapézoïdale. Selon un mode de réalisation, les motifs d'assemblage des pièces de peau 110 sont distincts des motifs d'assemblage des pièces de peau 130. Avantageusement, les motifs sont définis de sorte à répondre à des contraintes de reprise d'efforts appliqués sur le radôme, par exemple à partir de simulation sur ordinateur ou sur un appareil, lors de la reproduction au sol de contraintes représentatives d'un vol ou d'impacts avec des objets tiers.

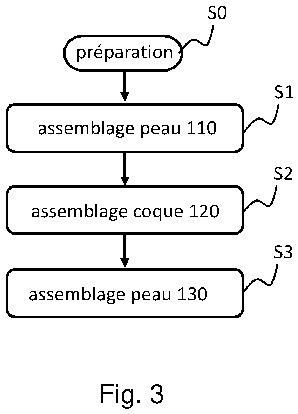

La Fig. 3 illustre un procédé d'assemblage du radôme d'aéronef 100 selon un mode de réalisation. Une étape S0 correspond à une étape de préparation à la fabrication du radôme 100 au terme de laquelle un moule concave présentant une forme complémentaire à la forme extérieure du radôme 100 et quasi-complémentaire à la forme de la coque 120 est positionné dans un atelier de fabrication.

Puis, lors d'une étape S1, un assemblage de la première peau 110, extérieure, est réalisé par positionnement des pièces de peau 111a et 111b, en une ou plusieurs couches, selon un motif d'assemblage prédéfini pour la peau extérieure 110. La coque 120 est ensuite positionnée et fixée lors d'une étape S2 contre la peau extérieure 110 appliquée sur le moule. Lors d'une étape S3, un assemblage de la deuxième peau 130, intérieure, est réalisé par positionnement des pièces de peau 131a et 131b sur la coque 120. Avantageusement, la plus grande dimension de chacune des pièces de peau utilisées lors des étapes S1 et S3 est inférieure à une longueur prédéterminée égale à un tiers de la plus grande dimension hors-tous H1 du radôme 100, ce qui permet d'offrir une grande facilité de positionnement et permet d'opérer l'assemblage du radôme 100 aussi bien manuellement qu'à l'aide d'un ou plusieurs robots industriels automatisés programmés pour opérer des positionnements selon des motifs d'assemblage prédéterminés. Préférentiellement, les pièces de peau présentent chacune une forme rectangulaire, trapézoïdale ou triangulaire dont les dimensions s'inscrivent dans un gabarit de format A3, format A4 ou format A5 puisque plus les pièces de peau sont petites et plus il est aisé d'automatiser leur assemblage sous forme d'épaisseur(s) de peau.

Selon un autre mode de réalisation, la coque 120 est maintenue sur un support lors de la fabrication du radôme 100 et les assemblages de pièces de peau intérieure 130 et extérieure 110 sont réalisés directement sur la coque 120.

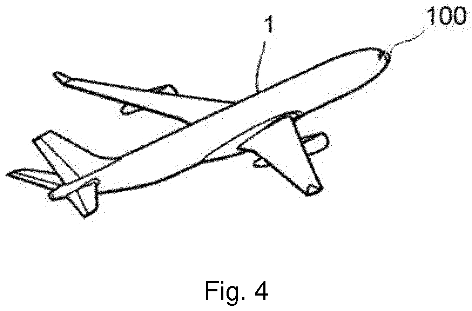

La Fig. 4 représente un aéronef 1 comprenant un radôme 100 selon un mode de réalisation. Avantageusement, la capacité à automatiser l'assemblage du radôme 100 de l'aéronef 1, grâce au procédé décrit, permet d'obtenir un gain substantiel en termes de productivité. En outre, l'utilisation de pièces de peau de dimensions réduites permet d'opérer une découpe à partir de bandes de matériau d'une largeur fixe et réduite, ce qui limite sensiblement les chutes de matières et optimise les coûts de production.

L'invention ne se limite pas aux seuls modes de réalisation et exemples cités mais plus largement à tout procédé de fabrication d'un radôme d'aéronef comprenant au moins un premier assemblage de pièces de peau pour assembler une peau extérieure sur une première surface d'une coque de radôme et un deuxième assemblage de pièces de peau pour assembler une peau intérieure sur une deuxième surface de la même coque, opposée à ladite première surface, avec tout ou partie des pièces de peau desdits premier et deuxième assemblages recouvrant partiellement une ou plusieurs pièces de peau voisines de l'assemblage qui les comprend, et de sorte que le rapport entre la surface d'une pièce de peau recouvrant une ou plusieurs pièces de peau voisines et la surface totale de cette pièce de peau n'excède pas une valeur seuil prédéterminée, par exemple 30%. Ainsi, selon des variantes, un radôme peut comprendre plus de trois couches de pièces de peau sur la surface extérieure d'une coque et plus de deux couches de pièces de peau sur la surface intérieure de cette même coque. En outre, les pièces de peau peuvent présenter des dimensions plus petites que celles précédemment décrites. Ainsi, selon une variante, une pièce de peau peut présenter des dimensions inférieures à celles décrites, par exemple de sorte à s'inscrire dans un format inférieur au format A5.

## Revendications

1. Radôme d'aéronef (100), destiné à être installé à l'avant du fuselage et former un dôme ou une pointe, comprenant au moins une coque (120), une première peau (110) et une deuxième peau (130) respectivement assemblées sur deux faces opposées de chacune des au moins une coque (120), ladite première peau (110) et ladite deuxième peau (130) étant respectivement formées d'un premier assemblage de pièces (111a, 111b) de peau et d'un deuxième assemblage de pièces (131a, 131b) de peau, ledit radôme (100) étant tel que :
- tout ou partie des pièces de peau desdits premier et deuxième assemblages recouvre partiellement une ou plusieurs pièces de peau voisines de l'assemblage qui les comprend, et,
- le rapport entre la surface d'une pièce de peau recouvrant une ou plusieurs pièces de peau voisines et la surface totale de cette pièce de peau n'excède pas 30%, et ledit radôme étant **caractérisé en ce que** :
- une couche de peau comprend des pièces de peau agencées côte à côte pour former au moins une couronne circulaire assemblée sur une portion arrière dudit radôme et des pièces de peau agencées côte à côte et formant des alignements parallèles de pièces de peau dans une partie avant du radôme.

2. Radôme d'aéronef (100) selon la revendication 1, dans lequel lesdits premier et deuxième assemblages reproduisent chacun un motif d'assemblage prédéterminé.

3. Radôme d'aéronef (100) selon l'une des revendications 1 à 2, dans lequel chacune des pièces (111a, 111b, 131a, 131b) de peau présente une forme rectangulaire, trapézoïdale ou triangulaire.

4. Radôme d'aéronef (100) selon l'une des revendications 1 à 3, dans lequel la plus grande dimension de chacune des pièces de peau est inférieure à un tiers de la plus grande dimension hors-tout du radôme, préférentiellement inférieure à 42 cm, encore plus préférentiellement inférieure à 30 cm.

5. Radôme d'aéronef selon l'une des revendications 1 à 4, dans lequel les pièces de peau sont réalisées dans un matériau composite comprenant un renfort en tissu de fibres parmi lesquelles la fibre de lin, le chanvre, le polyéthylène simple ou à très haut poids moléculaire, le tissu de verre, le tissu de quartz, le tissu d'aramide, ledit tissu étant préimprégné d'une résine organique ou synthétique thermodurcissable ou thermoplastique.

6. Radôme d'aéronef selon l'une des revendications 1 à 5, dans lequel la coque (120) est réalisée en mousse, ou en papier, ou en résine, et présente une structure alvéolaire.

7. Procédé d'assemblage d'un radôme d'aéronef, destiné à être installé à l'avant du fuselage et former un dôme ou une pointe, comprenant un assemblage d'une première peau (110) et d'une deuxième peau (130) sur respectivement deux faces opposées d'une même coque (120), ladite première peau (110) et ladite deuxième peau (130) étant respectivement formées d'un premier assemblage de pièces (111a, 111b) de peau et d'un deuxième assemblage de pièces (131a, 131b) de peau, le procédé étant tel que :
- tout ou partie des pièces de peau desdits premier et deuxième assemblages recouvre partiellement une ou plusieurs pièces de peau voisines de l'assemblage qui les comprend, et,
- le rapport entre la surface d'une pièce de peau recouvrant une ou plusieurs pièces de peau voisines et la surface totale de cette pièce de peau n'excède pas une valeur seuil prédéterminée, ladite valeur étant égale à 30%, et le procédé étant **caractérisé en ce que** :
- une couche de peau comprend des pièces de peau agencées côte à côte pour former au moins une couronne circulaire assemblée sur une portion arrière dudit radôme et des pièces de peau agencées côte à côte et formant des alignements parallèles de pièces de peau dans une partie avant du radôme.

8. Aéronef comprenant un radôme d'aéronef selon l'une des revendications 1 à 6.

## Patentansprüche

1. Flugzeugradom (100), das dazu bestimmt ist, an der Vorderseite des Rumpfes angebracht zu werden und eine Kuppel oder eine Spitze zu bilden, umfassend mindestens eine Schale (120), eine erste Haut (110) und eine zweite Haut (130), die jeweils auf zwei entgegengesetzten Seiten der mindestens einen Schale (120) gefügt sind, wobei die erste Haut (110) und die zweite Haut (130) jeweils aus einem ersten Verbund von Hautteilen (111a, 111b) und einem zweiten Verbund von Hautteilen (131a, 131b) gebildet sind, wobei das Radom (100) derart ist, dass:
- alle oder einige der Hautteile des ersten und zweiten Verbunds ein oder mehrere benachbarte Hautteile des Verbunds, der sie umfasst, teilweise bedecken, und
- das Verhältnis zwischen der Fläche eines Hautteils, das ein oder mehrere benachbarte Hautteile bedeckt, und der Gesamtfläche dieses Hautteils 30 % nicht überschreitet, und das Radom **dadurch gekennzeichnet ist, dass**:
- eine Hautschicht Hautteile umfasst, die nebeneinander angeordnet sind, um mindestens einen kreisförmigen Kranz zu bilden, der an einen hinteren Abschnitt des Radoms gefügt ist, und Hautteile, die nebeneinander angeordnet sind und parallele Aneinanderreihungen von Hautteilen in einem vorderen Bereich des Radoms bilden.

2. Flugzeugradom (100) nach Anspruch 1, wobei der erste und der zweite Verbund jeweils ein vorbestimmtes Fügemuster reproduzieren.

3. Flugzeugradom (100) nach einem der Ansprüche 1 bis 2, wobei jedes der Hautteile (111a, 111b, 131a, 131b) eine rechteckige, trapezförmige oder dreieckige Form aufweist.

4. Flugzeugradom (100) nach einem der Ansprüche 1 bis 3, wobei das größte Maß jedes der Hautteile weniger als ein Drittel des größten Maßes über alles des Radoms, vorzugsweise weniger als 42 cm, noch stärker bevorzugt weniger als 30 cm beträgt.

5. Flugzeugradom nach einem der Ansprüche 1 bis 4, wobei die Hautteile aus einem Verbundwerkstoff ausgeführt sind, der eine Verstärkung aus einem Gewebe aus Fasern, darunter Flachsfaser, Hanf, einfaches Polyethylen oder Polyethylen mit sehr hohem Molekulargewicht, Glasgewebe, Quarzgewebe, Aramidgewebe, umfasst, wobei das Gewebe mit einem duroplastischen oder thermoplastischen organischen oder synthetischen Harz vorimprägniert ist.

6. Flugzeugradom nach einem der Ansprüche 1 bis 5, wobei die Schale (120) aus Schaum oder aus Papier oder aus Harz ausgeführt ist und eine Zellstruktur aufweist.

7. Verfahren zum Fügen eines Flugzeugradoms, das dazu bestimmt ist, an der Vorderseite des Rumpfes angebracht zu werden und eine Kuppel oder eine Spitze zu bilden, umfassend ein Fügen einer ersten Haut (110) und einer zweiten Haut (130) auf jeweils zwei entgegengesetzten Seiten einer selben Schale (120), wobei die erste Haut (110) und die zweite Haut (130) jeweils aus einem ersten Verbund von Hautteilen (111a, 111b) und einem zweiten Verbund von Hautteilen (131a, 131b) gebildet sind, wobei das Verfahren derart ist, dass:
- alle oder einige der Hautteile des ersten und zweiten Verbunds ein oder mehrere benachbarte Hautteile des Verbunds, der sie umfasst, teilweise bedecken, und
- das Verhältnis zwischen der Fläche eines Hautteils, das ein oder mehrere benachbarte Hautteile bedeckt, und der Gesamtfläche dieses Hautteils einen Schwellenwert nicht überschreitet, wobei der Wert 30 % beträgt, und wobei das Verfahren **dadurch gekennzeichnet ist, dass**:
- eine Hautschicht Hautteile umfasst, die nebeneinander angeordnet sind, um mindestens einen kreisförmigen Kranz zu bilden, der an einen hinteren Abschnitt des Radoms gefügt ist, und Hautteile, die nebeneinander angeordnet sind und parallele Aneinanderreihungen von Hautteilen in einem vorderen Bereich des Radoms bilden.

8. Flugzeug, das ein Flugzeugradom nach einem der Ansprüche 1 bis 6 umfasst.

## Claims

1. Aircraft radome (100), intended to be installed at the front of the fuselage and form a dome or a tip, comprising at least one shell (120), a first skin (110) and a second skin (130) respectively assembled on two opposite faces of each of the at least one shell (120), said first skin (110) and said second skin (130) respectively being formed from a first assembly of skin pieces (111a, 111b) and a second assembly of skin pieces (131a, 131b), said radome (100) being such that:
- all or part of the skin pieces of said first and second assemblies partially overlaps one or more neighbouring skin pieces of the assembly that comprises them, and
- the ratio between the surface area of a skin piece overlapping one or more neighbouring skin pieces and the total surface area of that skin piece does not exceed 30%, and said radome being **characterized in that**:
- a skin layer comprises skin pieces arranged side-by-side to form at least one circular crown assembled on a rear portion of said radome and skin pieces arranged side-by-side and forming parallel alignments of skin pieces in a front part of the radome.

2. Aircraft radome (100) according to Claim 1, wherein said first and second assemblies each reproduce a predetermined assembly pattern.

3. Aircraft radome (100) according to either of Claims 1 and 2, wherein each of the skin pieces (111a, 111b, 131a, 131b) has a rectangular, trapezoidal or triangular shape.

4. Aircraft radome (100) according to one of Claims 1 to 3, wherein the largest dimension of each of the skin pieces is smaller than one third of the largest overall dimension of the radome, preferentially smaller than 42 cm, even more preferentially smaller than 30 cm.

5. Aircraft radome according to one of Claims 1 to 4, wherein the skin pieces are made of a composite material comprising a reinforcement made from a fabric of fibres including flax fibre, hemp, simple polyethylene or polyethylene with a very high molecular weight, glass fabric, quartz fabric, aramid fabric, said fabric being pre-impregnated with a thermosetting or thermoplastic organic or synthetic resin.

6. Aircraft radome according to one of Claims 1 to 5, wherein the shell (120) is made from foam, paper or resin, and has a cellular structure.

7. Method for assembling an aircraft radome, intended to be installed at the front of the fuselage and form a dome or a tip, comprising an assembly of a first skin (110) and of a second skin (130) respectively on two opposite faces of one and the same shell (120), said first skin (110) and said second skin (130) respectively being formed from a first assembly of skin pieces (111a, 111b) and a second assembly of skin pieces (131a, 131b), the method being such that:
- all or part of the skin pieces of said first and second assemblies partially overlaps one or more neighbouring skin pieces of the assembly that comprises them, and
- the ratio between the surface area of a skin piece overlapping one or more neighbouring skin pieces and the total surface area of that skin piece does not exceed a predetermined threshold value, said value being equal to 30%, and the method being **characterized in that**:
- a skin layer comprises skin pieces arranged side-by-side to form at least one circular crown assembled on a rear portion of said radome and skin pieces arranged side-by-side and forming parallel alignments of skin pieces in a front part of the radome.

8. Aircraft comprising an aircraft radome according to one of Claims 1 to 6.
